Europäisches Patentamt

European Patent Office

Office européen des brevets

(11) Publication number: **0 040 587**
**A2**

## (12) EUROPEAN PATENT APPLICATION

(21) Application number: **81830076.6**

(22) Date of filing: **15.05.81**

(51) Int. Cl.³: **B 60 R 13/06**
**B 60 J 1/17**

(30) Priority: **15.05.80 IT 6776480**

(43) Date of publication of application:
**25.11.81 Bulletin 81/47**

(84) Designated Contracting States:
**DE FR GB IT SE**

(71) Applicant: **S.I.R.P. STUDI INDUSTRIALI**
**REALIZZAZIONE PROTOTIPI S.p.A.**
**Via A.Grandi 11**
**I-10024 Moncalieri (Torino)(IT)**

(72) Inventor: **Mantovani, Aldo**
**Strada Val Pattonera 163/26**
**I-10133 Torino(IT)**

(74) Representative: **Jacobacci, Filippo et al,**
**c/o JACOBACCI-CASETTA & PERANI S.n.c. Via Alfieri, 17**
**I-10121 Torino(IT)**

(54) Structure for supporting and guiding vertically-movable panes in the side windows of motor-vehicle bodies.

(57) In a structure for supporting and guiding a vertically-movable pane in a side window of a motorvehicle body, the two posts (3) and the cross piece (4), which define the aperture of the window, form part of a support frame comprising two sheet metal half shells (7,8) which are joined together and have two mating flat edges which define a single tongue (11) arranged along the side edges and the upper edge of the window aperture in a plane which is substantially parallel to the general plane of the pane. Furthermore, the two posts (3) and the cross piece (4) are each provided with a gasket (12) for supporting and guiding the front edge, the rear edge and the upper edge, respectively, of the pane. The guide gasket (12) is secured within a channel of intermediate support member (20) which is, in its term, secured to the support frame. By this arrangement, the operations required for the manufacture of the structure are simple and economical, the aerodynamic characteristics of the car are improved and the noise during running is reduced.

FIG. 2

EP 0 040 587 A2

"Structure for supporting and guiding vertically-movable panes in the side windows of motor-vehicle bodies"

The present invention relates to structures for supporting and guiding vertically-movable panes in side windows of motor vehicle, of the type comprising a support frame including two vertical posts and a crosspiece which connects the tops of the two vertical posts so as to define the aperture of the window, the posts and the crosspiece each being provided with a gasket for supporting and guiding the front edge, the rear edge, and the upper edge of the pane, respectively.

The object of the present invention is to provide a structure of the aforesaid type which is particularly simple, comprising a reduced number of parts, of low cost and which at the same time makes it possible to improve the aerodynamic characteristics and reduce the noise of the vehicle.

In order to achieve this object, the present invention provides a structure of the type specified above, the main characteristic of which lies in the fact that the structure is comprised of two half-shells each formed by a single piece of pressed sheet metal, said two half-shells being coupled and secured to each other so as to define a lower panel of the body, and, above said lower panel, said support frame, in that the two interconnected pressed sheet metal half-shells have two mating flat edges which define a single tongue arranged along the side edges and the upper edge of the aperture of the window in a plane which is substantially parallel to the general plane of the pane, and in that each guide gasket is secured to an intermediate support member which is, in turn, secured to the support frame and has a substantially S-shaped cross-section, so as to comprise a first channel portion embracing the tongue, and a second channel portion facing the opposite side to the first channel portion, and within which the guide gasket is held.

This particular arrangement is extremely advantageous from the point of view of semplicity of manufacture of this structure, since the support frame is formed in one piece with the lower panel of the body, unlike the known solutions, in which such frame is formed by a separate piece secured to the structure of the body.

Furthermore, since the outer surface of the pane is substantially flush with the outer surface of the body, the aerodynamic characteristics of the car are improved and noise during run is reduced.

The present invention will now described with reference to the accompanying drawings, supplied purely by way of non-limitative example, in which:

Figure 1 is a perspective view of a motor vehicle door employing a supporting and guiding structure according to the present invention,

Figures 2 to 4 are sections taken along the lines II-II, III-III and IV-IV, respectively of Figure 1, and

Figure 5 is a diagrammatic view of the door of Figure 1 in disassembled condition.

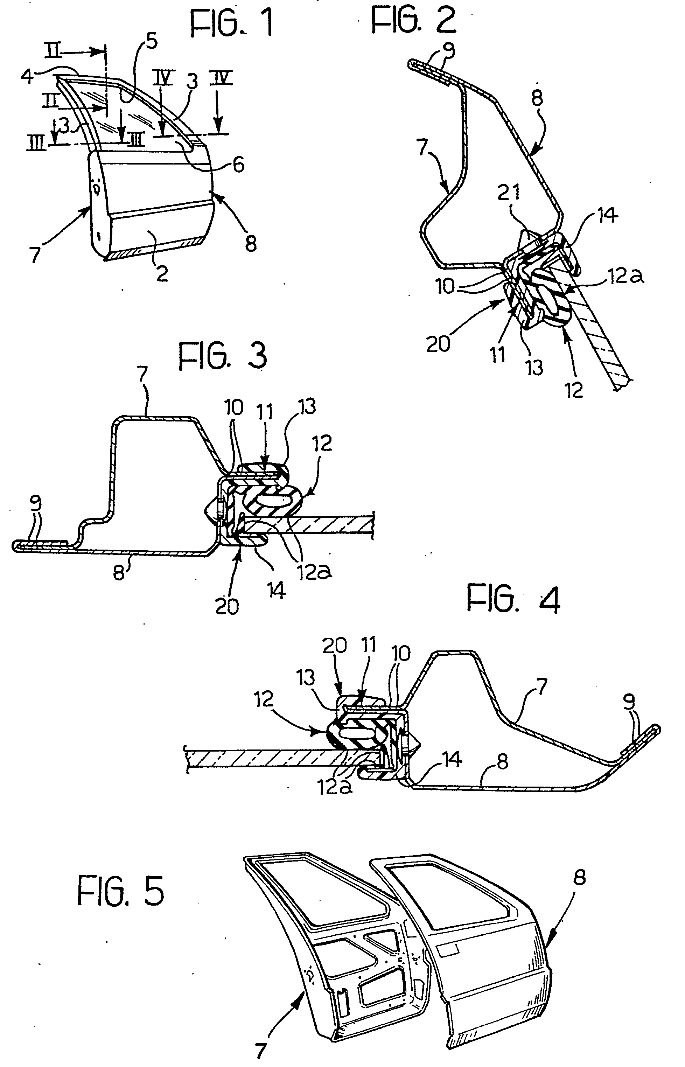

In Figure 1, a motor vehicle door is generally indicated 1 and comprises a lower panel 2, a pair of posts 3 projecting upwards from the panel 2, and a horizontal crosspiece 4 which interconnects the tops of the posts 3. The crosspiece 4 and the two posts 3 together with the upper edge of the lower panel 2, define the aperture 5 of the window of the door 1. This window is provided with a pane 6 which is displaceable vertically between a raised position (shown in Figure 1), in which it completely closes the aperture 5, and a lowered position retracted within the lower panel 2, in which it leaves the window 5 completely open.

The front edge and the rear edge of the pane 6 are supported and guided by the posts 3.

According to the invention, the crosspiece 4 and the posts 3 form part of a support frame formed in one piece with the lower panel 2 and comprised of a pair of half-shells 7, 8 each formed by a single piece of pressed sheet metal, the two half-shells being connected to each other, for instance by welding (Figure 5).

The two sheet metal half-shells 7, 8 have, in correspon - dence of the posts 3 and the crosspiece 4, flat mating edges 9, 10 secured (for example, welded) together.

The two flattened edges 10 define a tongue 11 arranged along the edge of the window in a plane which is substantially parallel to the general plane of the pane 6.

The two posts 3 and the crosspiece 4 are each provided with a gasket for supporting and guiding the upper edge, the front edge and the rear edge, respectively, of the pane 6, which is anchored to the tongue 11.

This guide gasket, indicated 12 in the accompanying drawings, is secured to a member 20 of plastics material which act as an intermediate support member and is, in turn, secured to the outer half-shell 8 by clips 21 which snap into seatings made in the outer half-shell 8.

The member 20 of plastics material has an S-shaped cross-section, so that is has a first channel portion 13 which embraces the tongue 11, and a second channel portion 14 which faces the opposite side to the first channel portion 14, being arranged on the side facing the exterior of the body, and within which the gasket 12 is held.

The parts of the guide gasket 12 which are intended to come into contact with the edge and with the opposite surfaces of the pane, indicated by 12a in the drawings, have a flocked surface, that is, are provided with glued-on nylon fibres, for the purpose of reducing friction with the pane.

Unlike the known solutions, in which the guide gasket of the pane is arranged inside a groove defined by two parallel tongues similar to the tongue 11, in the supporting and guiding structure according to the present invention the guide gasket, which is intended to receive the pane, is supported by a single tongue of the support frame. On the other hand the support frame including the two half-shells 7, 8 is formed in one piece with the lower panel 2, unlike the known solutions in which the support frame is formed by a separate piece secured to the body. This particular arrangement allows considerable simplification of the operations required for the manufacture of the structure for supporting and guiding the pane, as well as making it possible to improve the aerodynamic characteristics of the car and to reduce its noise, by virtue of the fact that the pane is less recessed relative to the external surface of the body than it is in the conventional solutions.

Naturally, without prejudice to the principle of the invention, the details of construction and forms of embodiment may vary extensively from what has been described and illustrated purely by way of non-limitative example, without thereby going beyond the scope of the present invention.

For example, the intermediate support member could be made of aluminium or ferrous material, rather than of plastics material.

Claims:

1. Structure for supporting and guiding vertically-movable panes in the side windows of motor vehicles, comprising a support frame including two vertical posts (3) and a crosspiece (4) which connects the tops of the two vertical posts (3) so as to define the aperture (5) of the window, said posts (3) and said crosspiece (4) each being provided with a gasket (12) for supporting and guiding the front edge, the rear edge and the upper edge of the pane, respectively, characterised in that the structure comprises two half-shells (7,8) each formed by a single piece of pressed sheet metal, coupled and connected to each other so as to define a lower panel (2) of the body and, above such lower panel (2), the said support frame, in that the two half-shells of pressed sheet metal (7,8) which are coupled to each other, have two flat mating edges (10) which define a single tongue (11) arranged along the side edges and the upper edge of the aperture of the window in a plane which is substantially parallel to the general plane of the pane (6), and in that each guide gasket (12) is secured to an intermediate support member which is secured, in turn, to the support frame and has a substantially S-shaped cross-section, so as to comprise a first channel portion (13) embracing the tongue (11), and a second channel portion (14) facing the opposite side to the first channel portion (13), being arranged towards the exterior of the body and within which the guide gasket (12) is held.

2. Supporting and guiding structure according to Claim 1, characterised in that the intermediate support member (20) is secured to the support frame by a number of clips (21) snapped into seatings made in the support frame.

3. Supporting and guiding structure according to Claim 2, characterised in that the intermediate support member (20) is of plastics material.

4. Supporting and guiding structure according to Claim 2, characterised in that the intermediate support member (20) is of alluminium.

5. Supporting and guiding structure according to claim 2, characterised in that the intermediate support member (2o) is of ferrous material.

0040587

1/1

FIG. 1

FIG. 2

FIG. 3

FIG. 4

FIG. 5